# EUROPEAN PATENT APPLICATION

(11) **EP 4 145 895 A1**
(43) Date of publication of application: **08.03.2023**
(21) Application number: 21796149.9
(22) Date of filing: 26.04.2021
(51) Int. Cl.: H04W 24/10, H04B 7/0413, H04L 5/00

(54) **BEAM REPORTING METHOD AND DEVICE**

(30) Priority: 29.04.2020 CN 202010358403
(71) Applicant: Vivo Mobile Communication Co., Ltd., Dongguan, Guangdong 523863 (CN)
(72) Inventor: YANG, Ang, Dongguan, Guangdong 523863 (CN); SUN, Peng, Dongguan, Guangdong 523863 (CN); SONG, Yang, Dongguan, Guangdong 523863 (CN); YANG, Yu, Dongguan, Guangdong 523863 (CN)
(74) Representative: Chas. Hude A/S
(86) International application number: PCT/CN2021/089967
(87) International publication number: WO 2021/218923

(57) **Abstract**

Embodiments of this application disclose a beam report method and a device to solve the problem of mutual interference among a plurality of TRPs in a multi-transmission and reception point (TRP) scenario. The method is performed by a terminal device, and includes: sending a beam report, where the beam report is obtained by performing measurement based on at least one of a reference signal (RS) of a first TRP and an RS of a second TRP, and for the beam report, referring to or prioritizing the first RS of the first TRP.

## Description

### CROSS-REFERENCE

This application claims priority to Chinese Patent Application No. 202010358403.9, filed with the Chinese Patent Office on April 29, 2020, and entitled "BEAM REPORT METHOD AND DEVICE", which is incorporated herein by reference in its entirety.

### TECHNICAL FIELD

Embodiments of this application relate to the field of communications, and in particular, to a beam report method and a device.

### BACKGROUND

In a multi-transmission and reception point/multi-panel (multi-TRP/multi-panel) scenario, a terminal device may receive same data or different data from a plurality of TRPs, so as to increase transmission reliability and throughput performance. However, in the multi-TRP scenario, there may be a problem of mutual interference among a plurality of TRPs, thereby reducing the system throughput. There is no solution for the interference among a plurality of TRPs in the related art.

### SUMMARY

Embodiments of this application are intended to provide a beam report method and a device to solve the problem of mutual interference among a plurality of TRPs in a multi-TRP scenario.

According to a first aspect, a beam report method is provided, the method is performed by a terminal device, and the method includes: sending a beam report, where the beam report is obtained by performing measurement based on at least one of a reference signal (RS) of a first transmission and reception point (TRP) and an RS of a second TRP, and for the beam report, referring to or prioritizing the first RS of the first TRP.

According to a second aspect, a beam report method is provided, the method is performed by a network device, and the method includes: receiving a beam report, where the beam report is obtained by performing measurement based on at least one of an RS of a first TRP and an RS of a second TRP, and for the beam report, referring to or prioritizing the first RS of the first TRP.

According to a third aspect, a terminal device is provided and includes: a sending module, configured to send a beam report, where the beam report is obtained by performing measurement based on at least one of an RS of a first TRP and an RS of a second TRP, and for the beam report, refer to or prioritize the first RS of the first TRP.

According to a fourth aspect, a network device is provided and includes: a receiving module, configured to receive a beam report, where the beam report is obtained by performing measurement based on at least one of an RS of a first TRP and an RS of a second TRP, and for the beam report, refer to or prioritize the first RS of the first TRP.

According to a fifth aspect, a terminal device is provided. The terminal device includes a processor, a memory, and an instruction or a program stored in the memory and executable on the processor, where when the processor executes the instruction or the program, steps of the beam report method in the first aspect are implemented.

According to a sixth aspect, a network device is provided. The network device includes a processor, a memory, and an instruction or a program stored in the memory and executable on the processor, where when the processor executes the instruction or the program, steps of the beam report method in the second aspect are implemented.

According to a seventh aspect, a readable storage medium is provided. The readable storage medium stores an instruction or a program, and when the instruction or the program is executed by a processor, the beam report method according to any one of the first aspect and the second aspect is implemented.

According to an eighth aspect, a chip is provided in an embodiment of this application, including a processor and a communication interface. The communication interface is coupled to the processor, and the processor is configured to run a program or an instruction to implement the beam report method according to any one of the first aspect and the second aspect.

In the embodiments of this application, the TRP may include a first TRP and a second TRP, and for the beam report of the terminal device, the first RS of the first TRP is used as a reference or prioritized, so as to ensure the transmission quality of the first TRP as far as possible. In addition, the interference among TRPs is coordinated to increase the system capacity and improve the user experience.

### BRIEF DESCRIPTION OF DRAWINGS

The accompanying drawings illustrated herein are provided to further understand this application and form a part of this application. The exemplary embodiments of this application and the descriptions thereof are used to explain this application and do not constitute an improper limitation on this application. In the accompanying drawings:
FIG. 1 is a schematic flowchart of a beam report method according to an embodiment of the present invention;
FIG. 2 is a schematic flowchart of a beam report method according to another embodiment of the present invention;
FIG. 3 is a schematic structural diagram of a terminal device according to an embodiment of the present invention;
FIG. 4 is a schematic structural diagram of a network device according to an embodiment of the present invention;
FIG. 5 is a schematic structural diagram of a terminal device according to another embodiment of the present invention; and
FIG. 6 is a schematic structural diagram of a network device according to another embodiment of the present invention.

### DESCRIPTION OF EMBODIMENTS

To make the objectives, technical solutions, and advantages of this application clearer, the following clearly and completely describes the technical solutions of this application with reference to the specific embodiments of this application and the corresponding accompanying drawings. Apparently, the described embodiments are merely some rather than all of the embodiments of this application. All other embodiments obtained by a person of ordinary skill in the art based on the embodiments of this application without creative efforts shall fall within the protection scope of this application. "And/or" in the embodiments of this application means at least one of the former item and the latter item.

It should be understood that the technical solutions in the embodiments of the present invention may be applied to various communication systems, such as a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunication System, UMTS) or a worldwide interoperability for microwave access (Worldwide Interoperability for Microwave Access, WiMAX) communication system, a 5G system, or a new radio (New Radio, NR) system, or a subsequent evolved communication system.

In the embodiments of this application, a terminal device may include but is not limited to a mobile station (Mobile Station, MS), a mobile terminal (Mobile Terminal), a mobile telephone (Mobile Telephone), user equipment (User Equipment, UE), a handset (handset), portable equipment (portable equipment), a vehicle (vehicle), and the like. The terminal device may communicate with one or more core networks by using a radio access network (Radio Access Network, RAN). For example, the terminal device may be a mobile phone (or referred to as a "cellular" phone), or a computer having a wireless communication function; or the terminal device may be a portable, pocket-sized, handheld, computer built-in, or in-vehicle mobile apparatus.

In the embodiments of this application, a network device is an apparatus that is deployed in a radio access network and that is configured to provide a wireless communication function for the terminal device. The network device may be a base station, and the base station may include various types of macro base stations, micro base stations, relay stations, or access points. In systems that use different radio access technologies, devices that have a base station function may have different names. For example, in an LTE network, what is referred to as an evolved NodeB (evolved NodeB, eNB or eNodeB) in an LTE network is referred to as a Node B (Node B) in a 3rd generation (3rd Generation, 3G) network, and is referred to as a next generation NodeB (gNB) in a 5G system, or is referred to as a network device in the subsequent evolved communications system. However, the terms do not constitute a limitation.

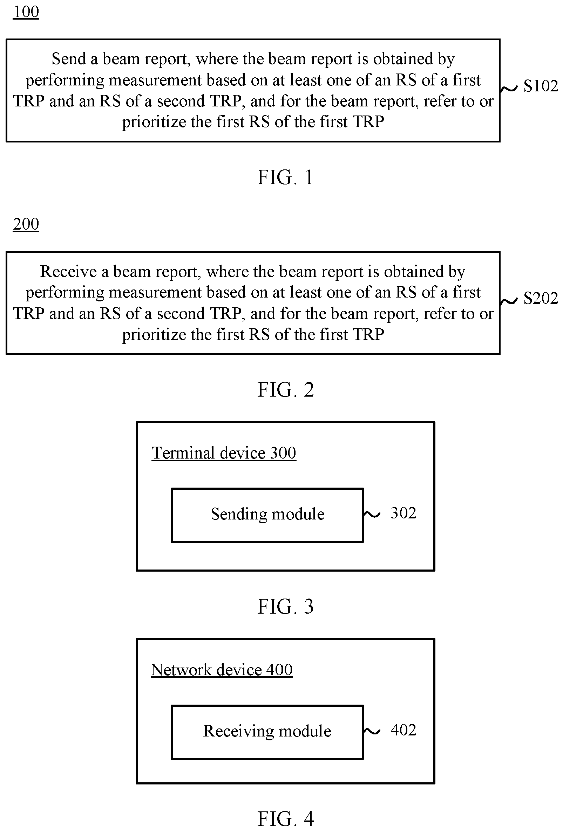

As shown in FIG. 1, an embodiment of this application provides a beam report method 100. The method can be executed by a terminal device, that is, the method can be executed by software or hardware installed in the terminal device. The method includes the following steps.

S102: Send a beam report, where the beam report is obtained by performing measurement based on at least one of a reference signal (Reference Signal, RS) of a first transmission and reception point (Transmission and Reception Point, TRP) and an RS of a second TRP, for the beam report, refer to or prioritize the first RS of the first TRP, or determine the beam report based on the first RS of the first TRP.

This embodiment of this application may be applied in a multi-transmission and reception point/multi-panel (multi-TRP/multi-panel) scenario, and the terminal device may receive same data or different data from the plurality of TRPs. The plurality of TRPs may be ideal backhauls (ideal backhaul) or non-ideal backhauls (non-ideal backhaul).

The plurality of TRPs include at least a first TRP and a second TRP, where the first TRP may also be referred to as a master TRP of the terminal device, and the communication between the network device and the terminal device mainly relies on the master TRP. Therefore, both the network device and the terminal device want to ensure the performance of the master TRP. The second TRP may be referred to as a secondary TRP of the terminal device, and there may be one or more secondary TRPs. Both the network device and the terminal device wish that a beam selected for the secondary TRP may have an interference with the master TRP as little as possible, to ensure the transmission quality of the secondary TRP.

In this embodiment of this application, the beam report sent by the terminal device may be obtained by performing measurement based on the RS of the first TRP; or obtained by performing measurement based on the RS of the second TRP; or obtained by performing measurement based on both the RS of the first TRP and the RS of the second TRP.

The reference signal mentioned in the embodiments of this application may be a synchronization signal and PBCH block (Synchronization Signal and PBCH block, SSB), or a channel state information-reference signal (Channel State Information-Reference Signal, CSI-RS).

In this embodiment of this application, for the beam report sent by the terminal device, the first RS of the first TRP is used as a reference or prioritized. For example, if the beam report is obtained by performing measurement based on the RS of the second TRP, for the beam report, the first RS of the first TRP is used as a reference. In another example, if the beam report is obtained by performing measurement based on the RS of the first TRP and the RS of the second TRP, for the beam report, the first RS of the first TRP is prioritized. In another example, if the beam report is obtained by performing measurement based on the RS of the first TRP, for the beam report, the first RS of the first TRP is prioritized.

There may be one or more first RSs. For example, the first RS may be all RSs used to perform beam measurement on the first TRP; for another example, the first RS may be one or more specified RSs. The number of the first RS may be configured by the network device, or reported by the terminal device, or determined by the terminal device, or defaulted in the protocol.

It can be understood that since there is an association relationship between the RS and the beam, for the beam report, the referring to or prioritizing the first RS of the first TRP mentioned in the embodiments of this application may also be referred to as for the beam report, referring to or prioritizing a beam represented by the first RS of the first TRP.

In this embodiment of this application, for the beam report sent by the terminal device, the RS (a beam represented by the RS) of the second TRP may also not be used as a reference.

According to the beam report method in the embodiments of this application, the TRP may include a first TRP and a second TRP, and there are different processing methods for the two TRPs in the beam report of the terminal device. For the beam report, the first RS of the first TRP is used as a reference or prioritized, so as to ensure the transmission quality of the first TRP as far as possible. In addition, the interference among TRPs is coordinated to increase the system capacity and improve the user experience.

It should be noted that the beam mentioned in the embodiments of this application may also be a spatial domain filter (spatial domain filter), a spatial domain receive filter (spatial domain receive filter), a spatial domain transmit filter (spatial domain transmit filter), and the like.

The beam quality mentioned in the embodiments of this application includes at least one of the following: a signal-to-noise ratio (SINR); a reference signal received power (Reference Signal Received Power, RSRP); and a reference signal received quality (Reference Signal Received Quality, RSRQ).

The first TRP and the second TRP mentioned in the embodiments of this application may be distinguished by using a TRP ID. The TRP ID may be a control resource set pool index (CORESETPoolIndex) in the control resource set (Control Resource SET, CORESET), or an ID of a physical cell corresponding to the TRP, or another ID that represents the TRP.

The RS of the TRP mentioned in the embodiments of this application may also be referred to as an RS associated with the TRP. Specifically, the RS may be associated with the TRP through network device configuration or terminal device reporting.

The network device configuration may be implemented in a plurality of methods. For example, the network device configures TRP identification information for the RS. For another example, the network device configures an RS list or a transmission configuration indication (Transmission Configuration Indication, TCI) list for the TRP, and the RS in the RS list or the TCI list is the RS associated with the TRP (or referred to as corresponding to). For another example, the CORESET corresponding to the TRP is associated with the RS by activating the RS, configuring the RS, and the like. Specifically, for example, signaling for activating the RS, signaling for configuring the RS, or signaling for associating the RS with the CSI report is sent by a physical downlink shared channel (Physical Downlink Shared Channel, PDSCH) corresponding to the CORESET. Specifically, for example, the CSI report including the RS quality is sent on an uplink channel triggered by the CORESET, which are not listed one by one herein.

Optionally, as an embodiment, the beam report mentioned in the embodiment 100 is obtained by performing measurement based on the RS of the first TRP, and for the beam report mentioned in the embodiment 100, the referring to or prioritizing the first RS of the first TRP includes: for the beam report sent by the terminal device, not referring to the RS of the second TRP. The first TRP in this embodiment is the master TRP, and the network device and the terminal device want to ensure the performance of the master TRP. Therefore, there is no need to refer to the RS of the second TRP (the secondary TRP).

Optionally, the first RS of the first TRP mentioned in the embodiments of this application includes at least one of the following 1) to 11).
1) An RS configured by the network device. In this example, the network device configures an RS list (list), and the RS list includes one or more first RSs of the first TRP.
2) An RS of the first TRP used for the beam report. The first RS may be used for at least one of the following: for a periodic beam report; for a semi-persistent beam report; and for an aperiodic beam report. The beam report mentioned in the foregoing examples may be a beam report of a layer 1 and/or a beam report of a layer 3.
3) An RS with the best signal quality of the first TRP. For example, the first RS is one or more RSs with the best signal quality reported in one beam report or reported in last few beam reports on the first TRP, where the foregoing beam report may be a beam report of a layer 1 and/or a beam report of a layer 3.
4) A quasi-co-location (Quasi-Co-Location, QCL) RS corresponding to a CORESET with an ID of 0 of the first TRP. For example, a QCL RS configured in a transmission configuration indication (Transmission Configuration Indication, TCI) state for the CORESET 0.
5) A QCL RS corresponding to a CORESET of the first TRP. Compared with example 4), this example is not limited to the QCL RS corresponding to the CORESET 0, and the first RS may be the QCL RS corresponding to the CORESET of the first TRP.
6) An RS corresponding to a CORESET with a smallest or largest ID in the CORESET of the first TRP. In this example, the CORESET with the smallest ID may be the CORESET 0 or a CORESET with another ID.
7) A path loss (Path Loss, PL) calculation reference RS of the first TRP. For example, a PL RS of the first TRP that is activated by media access control-control element signaling.
8) An RS configured in space-related information associated with the first TRP. The space-related information may include at least one of the following: a physical uplink control channel (Physical Uplink Control Channel PUCCH); a physical uplink shared channel (Physical Uplink Shared Channel, PUSCH); and a sounding reference signal (Sounding Reference Signal, SRS).
9) An RS corresponding to a beam used for a physical downlink control channel (Physical Downlink Control Channel, PDCCH) in the first TRP.
10) An RS corresponding to an activated beam in the first TRP. Optionally, the activated refers to being activated through the media access control-control element signaling.
11) An RS corresponding to a beam used for a physical downlink shared channel (Physical Downlink Shared Channel, PDSCH) in the first TRP. Optionally, the first RS is the last used RS for the PDSCH in the first TRP. The last used RS mentioned herein may be the last used RS in the TCI, or the RS in the TCI with the lowest or highest TCI ID.

It can be understood that the cases listed in 1) to 11) may also be combined, for example, case 9) and case 10) are combined, that is, the first RS is an RS corresponding to the activated beam used for the PDCCH in the first TRP (that is, the activated beam is used to transmit the PDCCH).

For example, case 10) and case 11) are combined, that is, the first RS is an RS corresponding to the activated beam used for the PDSCH in the first TRP (that is, the activated beam is used to transmit the PDSCH).

In actual application, a plurality of candidate RSs can be determined by the method for determining the first RS, and then a predetermined method is used to select one or more RSs with the high priority as the first RS. The predetermined method mentioned may be configured by the network device, or selected by the terminal device, or defaulted in the protocol.

In the embodiment 100, if the first RS changes, the embodiment 100 may further include the following steps: triggering an aperiodic beam report and sending the aperiodic beam report to the second TRP; or sending a first message to the second TRP, where the first message is used to indicate that the first RS changes.

This example is applicable to a scenario where the beam report is obtained by performing measurement based on the RS of the second TRP, and for the beam report, the first RS of the first TRP is used as a reference, so that the second TRP can know in time that for the received beam report, the changed first RS is used as a reference.

Optionally, as an embodiment, the number of the first RS mentioned in the embodiment 100 is N, the beam report mentioned in the embodiment 100 is obtained by performing measurement based on the RS of the second TRP, the beam report includes M RSs of the second TRP, M and N are positive integers, and for the beam report, the referring to the first RS of the first TRP includes: 1) for the M RSs of the second TRP, referring to M first RSs respectively; or 2) for each of the M RSs of the second TRP, referring to N first RSs.

In the case 1), the M RSs of the second TRP may be in a one-to-one reference relationship with the M first RSs, for example, for an L^{th} RS of the second TRP, reference may be made to an L^{th} RS of the first TRP, and L is an integer greater than 1 and less than or equal to M.

Optionally, when N is greater than or equal to M, for the M RSs of the second TRP, there are corresponding RSs of the first TRP; when N is less than M, for first N RSs of the second TRP, there are corresponding RSs of the first TRP. There are a plurality of choices for remaining M-N RSs of the second TRP, for example, it is not necessary to refer to the RS of first TRP, for example, the RS of the first TRP is referenced in sequence again (for an N+1^{th} RS of the second TRP, referring to the first RS of the first TRP, for an N+2^{th} RS of the second TRP, referring to the second RS of the first TRP, and so on), for example, referring to all RSs of the first TRP, and for example, referring to any RS of the first TRP.

Optionally, as an embodiment, for the beam report mentioned in the embodiment 100, the referring to the first RS of the first TRP includes at least one of the following three cases.
1. The beam report is obtained by performing measurement based on the RS of the second TRP, and for the beam report, the referring to the first RS of the first TRP includes: the beam report includes an RS with a smallest first interference value to the first RS. In this example, the beam report may include an RS ID (ID) and a beam quality of the RS, and the first interference value of the RS to the first RS is the smallest. In this example, first interference values of a plurality of RSs of the second TRP to the first RS may be measured respectively, and finally an ID of the RS with the smallest first interference value to the first RS and a beam quality of the RS are reported.

It should be noted that the beam report mentioned in the embodiments of this application includes a specific RS may refer to that the beam report includes the ID of the RS and/or includes the beam quality of the RS.

In a case that there are a plurality of first RSs, the foregoing first interference value may be a maximum interference to the plurality of first RSs; or the first interference value may be an average interference to the plurality of first RSs. The average interference can be calculated by using a combination of linear averaging, multiplicative averaging, and other common averaging methods with a domain being a linear domain or a dB domain or a logarithmic domain. For example, the addition, subtraction, multiplication, and division of the logarithmic domain are corresponding to the multiplication, division, power, and square root of the linear domain.

2. The beam report is obtained by performing measurement based on the RS of the second TRP, and for the beam report, the referring to the first RS of the first TRP includes: the beam report includes an RS with a smallest second interference value of the first RS.

In a case that there are a plurality of first RSs, the foregoing second interference value may be a maximum interference of the plurality of first RSs; or the second interference value is an average interference of the plurality of first RSs. The average interference can be calculated by using a combination of linear averaging, multiplicative averaging, and other common averaging methods with a domain being a linear domain or a dB domain or a logarithmic domain.

3. The beam report is obtained by performing measurement based on the RS of the second TRP, and for the beam report, the referring to the first RS of the first TRP includes: for the RS of the second TRP included in the beam report, referring to a beam quality of the first RS and at least one of the following: a beam quality of the RS of the second TRP; a noise; a signal-to-interference-plus-noise ratio; and an interference value.

In an example, the beam report includes the second RS of the second TRP, where a signal-to-interference-plus-noise ratio of the second RS is the largest; or the second RS satisfies: a value calculated based on a combination of parameters of the first RS and/or the second RS satisfies a preset condition, where the parameters include a noise, a signal-to-interference-plus-noise ratio, a reference signal received power, and an interference value.

In this example, the first RS may be used as the noise, and the second RS may be used as the signal; or the first RS may be used as the signal, and the second RS may be used as the noise.

In the case 3, the terminal device can report the most suitable RS of the second TRP after considering factors such as the beam quality of the RS of the second TRP, the beam quality of the RS of the first TRP, the noise, and the like. For example:
1. If it is necessary to refer to a plurality of first RSs of the first TRP, the signal/interference is the maximum/minimum signal/interference of the plurality of first RSs of the first TRP, or an average signal/interference of the plurality of first RSs of the first TRP.
2. The second TRP reports the RS of the second TRP with the largest SINR. In this example, the first RS may be used as the noise, and the second RS may be used as the signal; or the first RS may be used as the signal, and the second RS may be used as the noise.
3. The terminal device reports the RS of the second TRP with the best combination of the SINR, the RSRP, the interference, and the like.

In this example, the first RS may be used as the noise, and the second RS may be used as the signal; or the first RS may be used as the signal, and the second RS may be used as the noise.

The combination may be a combination of linear weighting, multiplicative weighting, and other common weighting methods in the dB domain or the linear domain. A specific weighting method and a weighting coefficient may be configured by the network device, or agreed in the protocol, or selected by the terminal device. For example, the weighting may be a linear weighting of the RSRP and the SINR in the dB domain, that is, a*SINR+b*RSRP, where values of a and b may be configured by the network device, or agreed in the protocol, or selected by the terminal device.

Optionally, as an embodiment, the beam report mentioned in the embodiment 100 is obtained by performing measurement based on the RS of the first TRP and the RS of the second TRP, and the first RS mentioned in this embodiment may be at least one of the RSs of the first TRP.

In this embodiment, when the network device configures the beam report including the RS of the first TRP and the RS of the second TRP, the terminal device preferentially considers the RS of the first TRP, which will be described in several embodiments below.

In this example, for the beam report, the prioritizing the first RS of the first TRP includes: the beam report includes at least one RS of the first TRP. Specifically, the beam report includes at least K RSs of the first TRP, where K is a positive integer, and a value of K may be agreed in a protocol or configured by the network device.

Optionally, for the beam report, the prioritizing the first RS of the first TRP includes: in a case that a beam quality of the RS of the second TRP is higher than a beam quality of the RS of the first TRP and reaches a preset threshold, the beam report includes the RS of the second TRP.

In this example, the RS of the second TRP may be any RS of the second TRP, or a specified RS of the second TRP; correspondingly, the RS of the first TRP may be any RS of the first TRP, or a specified RS of the first TRP.

In this example, specifically, for example, the terminal device reports a specific RS of the second TRP only when the beam quality of an RS of the second TRP is higher than that of an RS of the first TRP by X1 dB, otherwise a specific RS of the first TRP is reported. X1 may be defaulted in the protocol, configured by the network device, or reported by the terminal device.

Optionally, the beam report is a group based beam report (group based beam report), and for the beam report, the prioritizing the first RS of the first TRP includes: each group of paired RSs or at least one group of paired RSs in the beam report includes at least one RS of the first TRP.

In this example, specifically, for example, at least one group of paired RSs are RSs of the first TRP and RSs of the second TRP; or at least one group of paired RSs are all RSs of the first TRP.

Optionally, the beam report is a group based beam report, and for the beam report, the prioritizing the first RS of the first TRP includes: in the beam report, the RS of the first TRP and/or the RS of the second TRP satisfies at least one of the following 1) to 4).
1) A signal strength of the RS of the first TRP is weighted.
2) An interference of the RS of the first TRP to the RS of the second TRP is weighted.
3) An interference of the RS of the second TRP to the RS of the first TRP is weighted.
4) A signal strength of the RS of the second TRP is weighted.

Optionally, the RS of the first TRP and/or the RS of the second TRP satisfies at least one of the following 1) to 4).
1) The signal strength of the RS of the first TRP is positively weighted.
2) The interference of the RS of the first TRP to the RS of the second TRP is negatively weighted.
3) The interference of the RS of the second TRP to the RS of the first TRP is positively weighted.
4) The signal strength of the RS of the second TRP is negatively weighted.

The weighting mentioned in the foregoing example is adding X2 to the signal/interference, or multiplying X2, or taking X2 to the power, or performing other linear operations in the linear domain or the dB domain or the logarithmic domain. X2 may be defaulted in the protocol, configured by the network device, or reported by the terminal device.

The positive weighting mentioned above is usually added with X2, where X2>0; or multiplied by X2 or taken to the power of X2, where X2>1.

The negative weighting mentioned above is usually added with X2, where X2<0; or multiplied by X2 or taken to the power of X2, where X2<1.

Optionally, the first TRP and/or the second TRP mentioned in the embodiments is determined by at least one of the following 1) to 6).
1) A control resource set pool index (CORESETPoolIndex) in the CORESET, for example, a CORESETPoolIndex ID of the first TRP in the CORESET is 0, or the CORESETPoolIndex ID of the first TRP in the CORESET is the smallest, or the CORESETPoolIndex ID of the first TRP in the CORESET is the largest, or the CORESETPoolIndex ID of the first TRP in the CORESET is indicated by a network, or the CORESETPoolIndex ID of the first TRP in the CORESET is reported by the terminal device.
2) A TCI location in a code point of a transmission configuration indication (TCI). For example, the first TRP is the first TCI in the code point of the TCI, or the last TCI in the code point of the TCI, or the TCI location indicated by the network, or the TCI location reported by the terminal device.
3) A CORESET identifier. For example, the first TRP is a TRP associated with the CORESET 0 or the CORESET with the smallest ID.
4) Indicated by high layer signaling. For example, the network device directly indicates the first TRP and/or the second TRP through high layer signaling. The high layer signaling may be radio resource control (Radio Resource Control, RRC) signaling, and may also be media access control-control element (Media Access Control-Control Element, MAC CE) signaling.
5) Reported by the terminal device. For example, the terminal device directly reports the first TRP and/or the second TRP through the high layer signaling.
6) Configured by special configuration signaling.

In an example, the first TRP is determined by at least one of the methods 1) to 6), where the second TRP is a TRP other than the first TRP.

In an example, the second TRP is configured through the special configuration signaling in 6), where the special configuration signaling is used to configure at least one of the following: an identifier of the first TRP; an RS associated with the first TRP; and a specially configured RS, where the specially configured RS belongs to the first TRP or the second TRP.

The special configuration signaling may be CORESET configuration signaling of the second TRP, or related CSI configuration signaling, CSI report configuration signaling, and the like.

Specifically, for example, the special configuration signaling mentioned above may be: CSI measurement configuration (CSI-MeasConfig) signaling, CSI report configuration (CSI-ReportConfig) signaling, CSI resource configuration (CSI-ResourceConfig) signaling, non-zero power CSI reference signal resource set (NZP-CSI-RS-ResourceSet) signaling, non-zero power CSI reference signal resource (NZP-CSI-RS-Resource) signaling, CSI-SSB resource set (CSI-SSB-ResourceSet) signaling, SRS configuration (SRS-Config) signaling, SRS resource set (SRS-ResourceSet) signaling, SRS resource (SRS-Resource) signaling, PDCCH configuration (PDCCH-Config) signaling, PDSCH configuration (PDSCH-Config) signaling, PUCCH configuration (PUCCH-Config) signaling, PUSCH configuration (PUSCH-Config) signaling, and associated signaling.

The special configuration signaling mentioned above may be high layer related configuration signaling, such as cell group configuration (CellGroupConfig) signaling, special cell configuration (SpCellConfig) signaling, reconfiguration with synchronization (ReconfigurationWithSync) signaling, serving cell common configuration (ServingCellConfigCommon) signaling, serving cell configuration (ServingCellConfig) signaling, and associated signaling.

The beam report method according to an embodiment of the present invention is described above in detail with reference to FIG. 1. The beam report method according to another embodiment of the present invention is described below in detail with reference to FIG. 2. It may be understood that interaction between a network device and a terminal device described on the network device side is the same as that described on the terminal device side in the method shown in FIG. 1. To avoid repetition, relevant descriptions are appropriately omitted.

FIG. 2 is a schematic flowchart of implementing a beam report method according to an embodiment of the present invention. The method may be applied to a network device side. As shown in FIG. 2, the method 200 includes the following steps.

S202: Receive a beam report, where the beam report is obtained by performing measurement based on at least one of an RS of a first TRP and an RS of a second TRP, and for the beam report, refer to or prioritize the first RS of the first TRP.

According to the beam report method in the embodiments of this application, the TRP may include a first TRP and a second TRP, and for the beam report of the terminal device, the first RS of the first TRP is used as a reference or prioritized, so as to ensure the transmission quality of the first TRP as far as possible. In addition, the interference among TRPs is coordinated to increase the system capacity and improve the user experience.

Optionally, as an embodiment, the beam report is obtained by performing measurement based on the RS of the first TRP, and for the beam report, the referring to or prioritizing the first RS of the first TRP includes: for the beam report, not referring to the RS of the second TRP.

Optionally, as an embodiment, the first RS includes at least one of the following: an RS configured by a network device; an RS of the first TRP used for the beam report; an RS with the best signal quality of the first TRP; a quasi-co-location (QCL) RS corresponding to a CORESET with an ID of 0 of the first TRP; a QCL RS corresponding to a CORESET of the first TRP; an RS corresponding to a CORESET with a smallest ID in the CORESET of the first TRP; a path loss (PL) calculation reference RS of the first TRP; an RS configured in space-related information associated with the first TRP; an RS corresponding to a beam used for a PDCCH in the first TRP; an RS corresponding to an activated beam in the first TRP; and an RS corresponding to a beam used for a physical downlink shared channel (PDSCH) in the first TRP.

Optionally, as an embodiment, the method 200 further includes: receiving an aperiodic beam report through the second TRP, where the aperiodic beam report is triggered in a case that the first RS changes; or receiving a first message through the second TRP, where the first message is used to indicate that the first RS changes.

Optionally, as an embodiment, the number of the first RS is N, the beam report is obtained by performing measurement based on the RS of the second TRP, the beam report includes M RSs of the second TRP, M and N are positive integers, and for the beam report, the referring to the first RS of the first TRP includes: for the M RSs of the second TRP, referring to M first RSs respectively; or for each of the M RSs of the second TRP, referring to N first RSs.

Optionally, as an embodiment, the beam report is obtained by performing measurement based on the RS of the second TRP, and for the beam report, the referring to the first RS of the first TRP includes: the beam report includes an RS with a smallest first interference value to the first RS.

Optionally, as an embodiment, the first interference value is a maximum interference to the plurality of first RSs; or the first interference value is an average interference to the plurality of first RSs.

Optionally, as an embodiment, the beam report is obtained by performing measurement based on the RS of the second TRP, and for the beam report, the referring to the first RS of the first TRP includes: the beam report includes an RS with a smallest second interference value of the first RS.

Optionally, as an embodiment, the second interference value is a maximum interference of the plurality of first RSs; or the second interference value is an average interference of the plurality of first RSs.

Optionally, as an embodiment, the beam report is obtained by performing measurement based on the RS of the second TRP, and for the beam report, the referring to the first RS of the first TRP includes: for the RS included in the beam report, referring to a beam quality of the first RS and at least one of the following: a beam quality of the RS of the second TRP; a noise; a signal-to-interference-plus-noise ratio; and an interference value.

Optionally, as an embodiment, the beam report includes the second RS of the second TRP, where a signal-to-interference-plus-noise ratio of the second RS is the largest; or the second RS satisfies: a value calculated based on a combination of parameters of the first RS and/or the second RS satisfies a preset condition, where the parameters include a noise, a signal-to-interference-plus-noise ratio, a reference signal received power, and an interference value.

Optionally, as an embodiment, the first RS is used as a noise, and the second RS is used as a signal; or the first RS is used as a signal, and the second RS is used as a noise.

Optionally, as an embodiment, the beam report is obtained by performing measurement based on the RS of the first TRP and the RS of the second TRP, and the first RS is at least one of RSs of the first TRP.

Optionally, as an embodiment, for the beam report, the prioritizing the first RS of the first TRP includes: the beam report includes at least one RS of the first TRP.

Optionally, as an embodiment, for the beam report, the prioritizing the first RS of the first TRP includes: in a case that a beam quality of the RS of the second TRP is higher than a beam quality of the RS of the first TRP and reaches a preset threshold, the beam report includes the RS of the second TRP.

Optionally, as an embodiment, the beam report is a group based beam report, and for the beam report, the prioritizing the first RS of the first TRP includes: at least one group of paired RSs in the beam report includes at least one RS of the first TRP.

Optionally, as an embodiment, the beam report is a group based beam report, and for the beam report, the prioritizing the first RS of the first TRP includes: in the beam report, the RS of the first TRP and/or the RS of the second TRP satisfies at least one of the following: a signal strength of the RS of the first TRP is weighted; an interference of the RS of the first TRP to the RS of the second TRP is weighted; an interference of the RS of the second TRP to the RS of the first TRP is weighted; and a signal strength of the RS of the second TRP is weighted.

Optionally, as an embodiment, the RS of the first TRP and/or the RS of the second TRP satisfies at least one of the following: the signal strength of the RS of the first TRP is positively weighted; the interference of the RS of the first TRP to the RS of the second TRP is negatively weighted; the interference of the RS of the second TRP to the RS of the first TRP is positively weighted; and the signal strength of the RS of the second TRP is negatively weighted.

Optionally, as an embodiment, the first TRP and/or the second TRP are/is determined by at least one of the following methods: a CORESETPoolIndex in the CORESET; a TCI location in a code point of a transmission configuration indication (TCI); a CORESET identifier; indicated by high layer signaling; reported by the terminal device; and configured by special configuration signaling.

Optionally, as an embodiment, the first TRP is determined by at least one of the methods, where the second TRP is a TRP other than the first TRP.

Optionally, as an embodiment, the second TRP is configured through the special configuration signaling, where the special configuration signaling is used to configure at least one of the following: an identifier of the first TRP; an RS associated with the first TRP; and a specially configured RS, where the specially configured RS belongs to the first TRP or the second TRP.

The beam report method according to an embodiment of the present invention is described above in detail with reference to FIG. 1 and FIG. 2. A terminal device according to an embodiment of the present invention is described in detail below with reference to FIG. 3.

FIG. 3 is a schematic structural diagram of a terminal device according to an embodiment of the present invention. As shown in FIG. 3, a terminal device 300 includes the following modules:
a sending module 302, configured to send a beam report, where the beam report is obtained by performing measurement based on at least one of an RS of a first TRP and an RS of a second TRP, and for the beam report, refer to or prioritize the first RS of the first TRP.

According to the terminal device provided in the embodiments of this application, the TRP may include a first TRP and a second TRP, and for the beam report of the terminal device, the first RS of the first TRP is used as a reference or prioritized, so as to ensure the transmission quality of the first TRP as far as possible. In addition, the interference among TRPs is coordinated to increase the system capacity and improve the user experience.

Optionally, as an embodiment, the beam report is obtained by performing measurement based on the RS of the first TRP, and for the beam report, the referring to or prioritizing the first RS of the first TRP includes: for the beam report, not referring to the RS of the second TRP.

Optionally, as an embodiment, the first RS includes at least one of the following: an RS configured by a network device; an RS of the first TRP used for the beam report; an RS with the best signal quality of the first TRP; a QCL RS corresponding to a CORESET with an ID of 0 of the first TRP; a QCL RS corresponding to a CORESET of the first TRP; an RS corresponding to a CORESET with a smallest ID in the CORESET of the first TRP; a path loss (PL) calculation reference RS of the first TRP; an RS configured in space-related information associated with the first TRP; an RS corresponding to a beam used for a physical downlink control channel (PDCCH) in the first TRP; an RS corresponding to an activated beam in the first TRP; and an RS corresponding to a beam used for a physical downlink shared channel (PDSCH) in the first TRP.

Optionally, as an embodiment, if the first RS changes, the sending module 302 is further configured to: trigger an aperiodic beam report and send the aperiodic beam report to the second TRP; or send a first message to the second TRP, where the first message is used to indicate that the first RS changes.

Optionally, as an embodiment, the number of the first RS is N, the beam report is obtained by performing measurement based on the RS of the second TRP, the beam report includes M RSs of the second TRP, M and N are positive integers, and for the beam report, the referring to the first RS of the first TRP includes: for the M RSs of the second TRP, referring to M first RSs respectively; or for each of the M RSs of the second TRP, referring to N first RSs.

Optionally, as an embodiment, the beam report is obtained by performing measurement based on the RS of the second TRP, and for the beam report, the referring to the first RS of the first TRP includes: the beam report includes an RS with a smallest first interference value to the first RS.

Optionally, as an embodiment, the first interference value is a maximum interference to the plurality of first RSs; or the first interference value is an average interference to the plurality of first RSs.

Optionally, as an embodiment, the beam report is obtained by performing measurement based on the RS of the second TRP, and for the beam report, the referring to the first RS of the first TRP includes: the beam report includes an RS with a smallest second interference value of the first RS.

Optionally, as an embodiment, the second interference value is a maximum interference of the plurality of first RSs; or the second interference value is an average interference of the plurality of first RSs.

Optionally, as an embodiment, the beam report is obtained by performing measurement based on the RS of the second TRP, and for the beam report, the referring to the first RS of the first TRP includes: for the RS included in the beam report, referring to a beam quality of the first RS and at least one of the following: a beam quality of the RS of the second TRP; a noise; a signal-to-interference-plus-noise ratio; and an interference value.

Optionally, as an embodiment, the beam report includes the second RS of the second TRP, where a signal-to-interference-plus-noise ratio of the second RS is the largest; or the second RS satisfies: a value calculated based on a combination of parameters of the first RS and/or the second RS satisfies a preset condition, where the parameters include a noise, a signal-to-interference-plus-noise ratio, a reference signal received power, and an interference value.

Optionally, as an embodiment, the first RS is used as a noise, and the second RS is used as a signal; or the first RS is used as a signal, and the second RS is used as a noise.

Optionally, as an embodiment, the beam report is obtained by performing measurement based on the RS of the first TRP and the RS of the second TRP, and the first RS is at least one of RSs of the first TRP.

Optionally, as an embodiment, for the beam report, the prioritizing the first RS of the first TRP includes: the beam report includes at least one RS of the first TRP.

Optionally, as an embodiment, for the beam report, the prioritizing the first RS of the first TRP includes: in a case that a beam quality of the RS of the second TRP is higher than a beam quality of the RS of the first TRP and reaches a preset threshold, the beam report includes the RS of the second TRP.

Optionally, as an embodiment, the beam report is a group based beam report, and for the beam report, the prioritizing the first RS of the first TRP includes: at least one group of paired RSs in the beam report includes at least one RS of the first TRP.

Optionally, as an embodiment, the beam report is a group based beam report, and for the beam report, the prioritizing the first RS of the first TRP includes: in the beam report, the RS of the first TRP and/or the RS of the second TRP satisfies at least one of the following: a signal strength of the RS of the first TRP is weighted; an interference of the RS of the first TRP to the RS of the second TRP is weighted; an interference of the RS of the second TRP to the RS of the first TRP is weighted; and a signal strength of the RS of the second TRP is weighted.

Optionally, as an embodiment, the RS of the first TRP and/or the RS of the second TRP satisfies at least one of the following: the signal strength of the RS of the first TRP is positively weighted; the interference of the RS of the first TRP to the RS of the second TRP is negatively weighted; the interference of the RS of the second TRP to the RS of the first TRP is positively weighted; and the signal strength of the RS of the second TRP is negatively weighted.

Optionally, as an embodiment, the first TRP and/or the second TRP are/is determined by at least one of the following methods: a CORESETPoolIndex in the CORESET; a TCI location in a code point of a transmission configuration indication (TCI); a CORESET identifier; indicated by high layer signaling; reported by the terminal device; and configured by special configuration signaling.

Optionally, as an embodiment, the first TRP is determined by at least one of the methods, where the second TRP is a TRP other than the first TRP.

Optionally, as an embodiment, the second TRP is configured through the special configuration signaling, where the special configuration signaling is used to configure at least one of the following: an identifier of the first TRP; an RS associated with the first TRP; and a specially configured RS, where the specially configured RS belongs to the first TRP or the second TRP.

The terminal device 300 according to this embodiment of the present invention may be referenced to the procedure corresponding to the method 100 according to the corresponding embodiments of the present invention. Furthermore, each unit/module in the terminal device 300 and the foregoing other operations and/or functions are used to implement corresponding procedure of the method 100, and the same or equivalent technical effects can be achieved. For brevity, details are not provided herein again.

FIG. 4 is a schematic structural diagram of a network device according to an embodiment of the present invention. As shown in FIG. 4, the network device 400 includes the following modules:
a receiving module 402, configured to receive a beam report, where the beam report is obtained by performing measurement based on at least one of an RS of a first TRP and an RS of a second TRP, and for the beam report, refer to or prioritize the first RS of the first TRP.

According to the network device provided in the embodiments of this application, the TRP may include a first TRP and a second TRP, and for the beam report of the terminal device, the first RS of the first TRP is used as a reference or prioritized, so as to ensure the transmission quality of the first TRP as far as possible. In addition, the interference among TRPs is coordinated to increase the system capacity and improve the user experience.

Optionally, as an embodiment, the beam report is obtained by performing measurement based on the RS of the first TRP, and for the beam report, the referring to or prioritizing the first RS of the first TRP includes: for the beam report, not referring to the RS of the second TRP.

Optionally, as an embodiment, the first RS includes at least one of the following: an RS configured by a network device; an RS of the first TRP used for the beam report; an RS with the best signal quality of the first TRP; a QCL RS corresponding to a CORESET with an ID of 0 of the first TRP; a QCL RS corresponding to a CORESET of the first TRP; an RS corresponding to a CORESET with a smallest ID in the CORESET of the first TRP; a path loss (PL) calculation reference RS of the first TRP; an RS configured in space-related information associated with the first TRP; an RS corresponding to a beam used for a physical downlink control channel (PDCCH) in the first TRP; an RS corresponding to an activated beam in the first TRP; and an RS corresponding to a beam used for a physical downlink shared channel (PDSCH) in the first TRP.

Optionally, as an embodiment, the receiving module 402 is further configured to: receive an aperiodic beam report through the second TRP, where the aperiodic beam report is triggered in a case that the first RS changes; or receive a first message through the second TRP, where the first message is used to indicate that the first RS changes.

Optionally, as an embodiment, the number of the first RS is N, the beam report is obtained by performing measurement based on the RS of the second TRP, the beam report includes M RSs of the second TRP, M and N are positive integers, and for the beam report, the referring to the first RS of the first TRP includes: for the M RSs of the second TRP, referring to M first RSs respectively; or for each of the M RSs of the second TRP, referring to N first RSs.

Optionally, as an embodiment, the beam report is obtained by performing measurement based on the RS of the second TRP, and for the beam report, the referring to the first RS of the first TRP includes: the beam report includes an RS with a smallest first interference value to the first RS.

Optionally, as an embodiment, the first interference value is a maximum interference to the plurality of first RSs; or the first interference value is an average interference to the plurality of first RSs.

Optionally, as an embodiment, the beam report is obtained by performing measurement based on the RS of the second TRP, and for the beam report, the referring to the first RS of the first TRP includes: the beam report includes an RS with a smallest second interference value of the first RS.

Optionally, as an embodiment, the second interference value is a maximum interference of the plurality of first RSs; or the second interference value is an average interference of the plurality of first RSs.

Optionally, as an embodiment, the beam report is obtained by performing measurement based on the RS of the second TRP, and for the beam report, the referring to the first RS of the first TRP includes: for the RS included in the beam report, referring to a beam quality of the first RS and at least one of the following: a beam quality of the RS of the second TRP; a noise; a signal-to-interference-plus-noise ratio; and an interference value.

Optionally, as an embodiment, the beam report includes the second RS of the second TRP, where a signal-to-interference-plus-noise ratio of the second RS is the largest; or the second RS satisfies: a value calculated based on a combination of parameters of the first RS and/or the second RS satisfies a preset condition, where the parameters include a noise, a signal-to-interference-plus-noise ratio, a reference signal received power, and an interference value.

Optionally, as an embodiment, the first RS is used as a noise, and the second RS is used as a signal; or the first RS is used as a signal, and the second RS is used as a noise.

Optionally, as an embodiment, the beam report is obtained by performing measurement based on the RS of the first TRP and the RS of the second TRP, and the first RS is at least one of RSs of the first TRP.

Optionally, as an embodiment, for the beam report, the prioritizing the first RS of the first TRP includes: the beam report includes at least one RS of the first TRP.

Optionally, as an embodiment, for the beam report, the prioritizing the first RS of the first TRP includes: in a case that a beam quality of the RS of the second TRP is higher than a beam quality of the RS of the first TRP and reaches a preset threshold, the beam report includes the RS of the second TRP.

Optionally, as an embodiment, the beam report is a group based beam report, and for the beam report, the prioritizing the first TRP of the first TRP includes: at least one group of paired RSs in the beam report includes at least one RS of the first TRP.

Optionally, as an embodiment, the beam report is a group based beam report, and for the beam report, the prioritizing the first RS of the first TRP includes: in the beam report, the RS of the first TRP and/or the RS of the second TRP satisfies at least one of the following: a signal strength of the RS of the first TRP is weighted; an interference of the RS of the first TRP to the RS of the second TRP is weighted; an interference of the RS of the second TRP to the RS of the first TRP is weighted; and a signal strength of the RS of the second TRP is weighted.

Optionally, as an embodiment, the RS of the first TRP and/or the RS of the second TRP satisfies at least one of the following: the signal strength of the RS of the first TRP is positively weighted; the interference of the RS of the first TRP to the RS of the second TRP is negatively weighted; the interference of the RS of the second TRP to the RS of the first TRP is positively weighted; and the signal strength of the RS of the second TRP is negatively weighted.

Optionally, as an embodiment, the first TRP and/or the second TRP are/is determined by at least one of the following methods: a CORESETPoolIndex in the CORESET; a TCI location in a code point of a transmission configuration indication (TCI); a CORESET identifier; indicated by high layer signaling; reported by the terminal device; and configured by special configuration signaling.

Optionally, as an embodiment, the first TRP is determined by at least one of the methods, where the second TRP is a TRP other than the first TRP.

Optionally, as an embodiment, the second TRP is configured through the special configuration signaling, where the special configuration signaling is used to configure at least one of the following: an identifier of the first TRP; an RS associated with the first TRP; and a specially configured RS, where the specially configured RS belongs to the first TRP or the second TRP.

The network device 400 according to this embodiment of the present invention may be referenced to the procedure corresponding to the method 200 according to the corresponding embodiments of the present invention. Furthermore, each unit/module in the network device 400 and the foregoing other operations and/or functions are used to implement corresponding procedure of the method 200, and the same or equivalent technical effects can be achieved. For brevity, details are not provided herein again.

The embodiments in this specification are described in a progressive manner. Each embodiment usually focuses on a difference from other embodiments. For a same or similar part of the embodiments, refer to each other. A device embodiment is described simply because the device embodiment is similar to the method embodiment. For related details, please refer to some description of the method embodiment.

In a case that an indefinite or a definite article (for example, "a" or "the") is used to refer to a characteristic or a noun, the article used does not limit the number of the characteristic or the noun. In other words, except where it is otherwise specifically stated that the number of the characteristic or the noun is one, it does not exclude the case that the number of the characteristic or the noun is more than one.

Furthermore, the terms "first," "second," "third," and the like are used in the specification and claims to distinguish between similar elements and these terms do not necessarily describe a sequence or a chronological order. It should be understood that the terms are interchangeable under appropriate circumstances, and the embodiments of the present invention described herein can be executed in other orders than those described or illustrated herein.

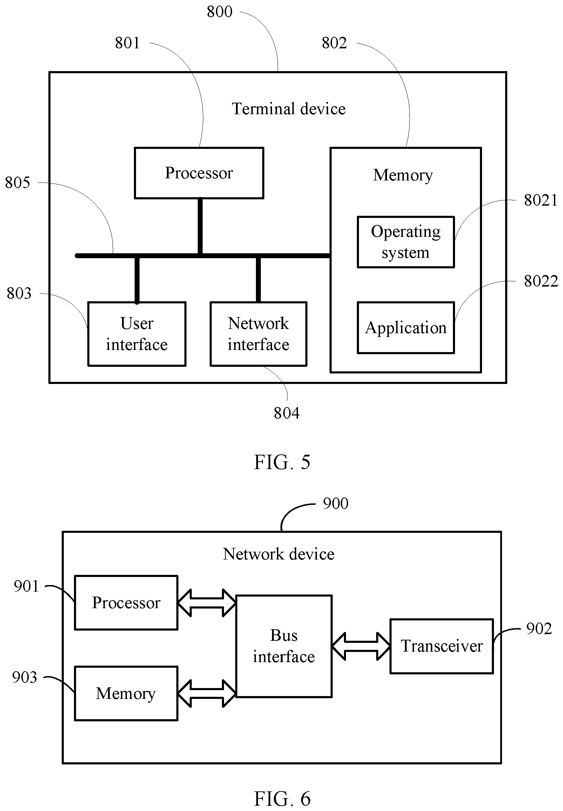

FIG. 5 is a block diagram of a terminal device according to another embodiment of the present invention. As shown in FIG. 5, a terminal device 500 includes: at least one processor 501, a memory 502, at least one network interface 504, and a user interface 503. All components in the terminal device 500 are coupled together through a bus system 505. It can be understood that the bus system 505 is configured to implement connection and communication between these components. In addition to a data bus, the bus system 505 further includes a power bus, a control bus, and a status signal bus. However, for clear description, various buses are marked as the bus system 505 in FIG. 5.

The user interface 503 may include a display, a keyboard, a clicking device (for example, a mouse or a trackball), a touch panel, or a touchscreen.

It may be understood that the memory 502 in this embodiment of the present invention may be a volatile memory or a non-volatile memory, or may include both a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 502 of the system and method described in the embodiments of the present invention is intended to include but is not limited to these and any other suitable type of memory.

In some implementation manners, the memory 502 stores the following element, an executable module or a data structure, or a subset thereof, or an extension set thereof: an operating system 5021 and an application program 5022.

The operating system 5021 includes various system programs, for example, a framework layer, a kernel library layer, and a driver layer, and is configured to implement various basic services and process a hardware-based task. The application program 5022 includes various application programs, for example, a media player (Media Player) and a browser (Browser), and is used to implement various application services. A program for implementing the method in this embodiment of the present invention may be included in the application program 5022.

In this embodiment of the present invention, the terminal device 500 further includes: an instruction or a program stored in the memory 502 and executable on the processor 501. When the instruction or the program is executed by the processor 501, the following steps of the method embodiment 100 are implemented.

The method disclosed in the foregoing embodiment of the present invention may be applied to the processor 501, or implemented by the processor 501. The processor 501 may be an integrated circuit chip having a signal processing capability. During implementation, each step of the foregoing method may be completed by using an integrated logic circuit of hardware in the processor 501 or an instruction in a form of software. The foregoing processor 501 may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, or a discrete hardware component. The methods, steps, and logical block diagrams disclosed in the embodiments of the present invention may be implemented or executed. The general-purpose processor may be a microprocessor, or the processor may be any conventional processor or the like. The steps of the method disclosed with reference to the embodiments of the present invention may be directly performed by a hardware decoding processor, or may be performed by using a combination of hardware and software modules in a decoding processor. The software module may be located in a readable storage medium that is mature in the art, such as a random access memory, a flash memory, a read-only memory, a programmable read-only memory, an electrically erasable programmable memory, or a register. The readable storage medium is located in the memory 502. The processor 501 reads information in the memory 502, and completes steps of the foregoing method in combination with hardware of the processor 501. Specifically, the readable storage medium stores an instruction or a program, and when the instruction or the program is executed by the processor 501, steps of the foregoing method embodiment 100 are implemented.

It may be understood that the embodiments described in the embodiments of the present invention may be implemented by hardware, software, firmware, middleware, microcode, or a combination thereof. For implementation with hardware, the processing unit may be implemented in one or more application specific integrated circuits (Application Specific Integrated Circuit, ASIC), a digital signal processor (Digital Signal Processor, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for implementing the functions of this application, or a combination thereof.

For software implementations, the techniques described in embodiments of the present invention may be implemented by modules (for example, processes or functions) that perform the functions described in the embodiments of the present invention. A software code may be stored in the memory and executed by the processor. The memory may be implemented in the processor or outside the processor.

The terminal device 500 can implement each process implemented by the terminal device in the foregoing embodiments, and the same or equivalent technical effect can be achieved. To avoid repetition, details are not described herein again.

Refer to FIG. 6, FIG. 6 is a structural diagram of a network device applied in an embodiment of the present invention. The network device can implement details of the method embodiment 200 and achieve a same effect. As shown in FIG. 6, a network device 600 includes a processor 601, a transceiver 602, a memory 603, and a bus interface.

In this embodiment of the present invention, the network device 600 further includes: an instruction or a program stored in the memory 603 and executable on the processor 601. When the instruction or the program is executed by the processor 601, steps of the method embodiment 200 are implemented.

In FIG. 6, a bus architecture may include any quantity of interconnected buses and bridges, and is specifically linked by various circuits of one or more processors represented by the processor 601 and a memory represented by the memory 603. The bus architecture may further link various other circuits such as a peripheral device, a voltage regulator, and a power management circuit together. These are all well-known in the art, and therefore are not further described in this specification. The bus interface provides interfaces. The transceiver 602 may be a plurality of elements, in other words, includes a transmitter and a receiver, and provides a unit configured to communicate with various other apparatuses on a transmission medium.

The processor 601 is responsible for managing the bus architecture and common processing, and the memory 603 may store data used when the processor 601 performs an operation.

An embodiment of this application further provides a readable storage medium. The readable storage medium stores a program or an instruction, and when a processor executes the program or the instruction, the processes of any one of the foregoing method embodiment 100 and the method embodiment 200 are implemented, and a same technical effect can be achieved. To avoid repetition, details are not described herein again.

The processor is a processor in the electronic device in the foregoing embodiment. The readable storage medium includes a computer-readable storage medium such as a computer read-only memory (Read-Only Memory, ROM), a random access memory (Random Access Memory, RAM), a magnetic disk, an optical disc, or the like.

An embodiment of this application further provides a chip, where the chip includes a processor and a communication interface, the communication interface is coupled to the processor, and the processor is configured to run a program or an instruction to implement the processes of any one of the foregoing method embodiment 100 and the method embodiment 200, and a same technical effect can be achieved. To avoid repetition, details are not described herein again.

It should be understood that the chip mentioned in the embodiments of this application may also be referred to as a system-on-chip, a system chip, a chip system, a system-on-a-chip, or the like.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing the functions in the order shown or discussed, but may also include performing the functions in a substantially simultaneous manner or in the reverse order depending on the functions involved. For example, the method described may be performed in an order different from what is described, and various steps may also be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such understanding, the technical solutions of this application essentially, or the part contributing to the prior art may be implemented in a form of a software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific implementation manners. The foregoing specific implementation manners are merely schematic instead of restrictive. Under enlightenment of this application, a person of ordinary skills in the art may make many forms without departing from aims and the protection scope of claims of this application, all of which fall within the protection scope of this application.

## Claims

1. A beam report method, wherein the method is performed by a terminal device, and comprises:
sending a beam report, wherein the beam report is obtained by performing measurement based on at least one of a reference signal (RS) of a first transmission and reception point (TRP) and an RS of a second TRP, and for the beam report, referring to or prioritizing the first RS of the first TRP.

2. The method according to claim 1, wherein the first RS comprises at least one of the following:
an RS configured by a network device;
an RS of the first TRP used for the beam report;
an RS with the best signal quality of the first TRP;
a quasi-co-location (QCL) RS corresponding to a control resource set (CORESET) with an ID of 0 of the first TRP;
a QCL RS corresponding to a CORESET of the first TRP;
an RS corresponding to a CORESET with a smallest ID in the CORESET of the first TRP;
a path loss (PL) calculation reference RS of the first TRP;
an RS configured in space-related information associated with the first TRP;
an RS corresponding to a beam used for a physical downlink control channel (PDCCH) in the first TRP;
an RS corresponding to an activated beam in the first TRP; and
an RS corresponding to a beam used for a physical downlink shared channel (PDSCH) in the first TRP.

3. The method according to claim 1, wherein in a case that the first RS changes, the method further comprises:
triggering an aperiodic beam report and sending the aperiodic beam report to the second TRP; or
sending a first message to the second TRP, wherein the first message is used to indicate that the first RS changes.

4. The method according to claim 1, wherein the number of the first RS is N, the beam report is obtained by performing measurement based on the RS of the second TRP, the beam report comprises M RSs of the second TRP, M and N are positive integers, and for the beam report, the referring to the first RS of the first TRP comprises:
for the M RSs of the second TRP, referring to M first RSs respectively; or
for each of the M RSs of the second TRP, referring to N first RSs.

5. The method according to claim 1, wherein the beam report is obtained by performing measurement based on the RS of the second TRP, and for the beam report, the referring to the first RS of the first TRP comprises:
the beam report comprises an RS with a smallest first interference value to the first RS.

6. The method according to claim 5, wherein
the first interference value is a maximum interference to a plurality of first RSs; or
the first interference value is an average interference to a plurality of first RSs.

7. The method according to claim 1, wherein the beam report is obtained by performing measurement based on the RS of the second TRP, and for the beam report, the referring to the first RS of the first TRP comprises:
the beam report comprises an RS with a smallest second interference value of the first RS.

8. The method according to claim 7, wherein
the second interference value is a maximum interference to the plurality of first RSs; or the second interference value is an average interference to the plurality of first RSs.

9. The method according to claim 1, wherein the beam report is obtained by performing measurement based on the RS of the second TRP, and for the beam report, the referring to the first RS of the first TRP comprises:
for the RS comprised in the beam report, referring to a beam quality of the first RS and at least one of the following: a beam quality of the RS of the second TRP; a noise; a signal-to-interference-plus-noise ratio; and an interference value.

10. The method according to claim 9, wherein the beam report comprises the second RS of the second TRP, wherein
a signal-to-interference-plus-noise ratio of the second RS is the largest; or
the second RS satisfies: a value calculated based on a combination of parameters of the first RS and/or the second RS satisfies a preset condition, wherein the parameters comprise a noise, a signal-to-interference-plus-noise ratio, a reference signal received power, and an interference value.

11. The method according to claim 10, wherein
the first RS is used as a noise, and the second RS is used as a signal; or
the first RS is used as a signal, and the second RS is used as a noise.

12. The method according to claim 1, wherein the beam report is obtained by performing measurement based on the RS of the first TRP and the RS of the second TRP, and the first RS is at least one of RSs of the first TRP.

13. The method according to claim 12, wherein for the beam report, the prioritizing the first RS of the first TRP comprises:
the beam report comprises at least one RS of the first TRP.

14. The method according to claim 12, wherein for the beam report, the prioritizing the first RS of the first TRP comprises:
in a case that a beam quality of the RS of the second TRP is higher than a beam quality of the RS of the first TRP and reaches a preset threshold, the beam report comprises the RS of the second TRP.

15. The method according to claim 12, wherein the beam report is a group based beam report, and for the beam report, the prioritizing the first RS of the first TRP comprises:
at least one group of paired RSs in the beam report comprises at least one RS of the first TRP.

16. The method according to claim 12, wherein the beam report is a group based beam report, and for the beam report, the prioritizing the first RS of the first TRP comprises:
in the beam report, the RS of the first TRP and/or the RS of the second TRP satisfies at least one of the following:
a signal strength of the RS of the first TRP is weighted;
an interference of the RS of the first TRP to the RS of the second TRP is weighted;
an interference of the RS of the second TRP to the RS of the first TRP is weighted; and
a signal strength of the RS of the second TRP is weighted.

17. The method according to claim 16, wherein the RS of the first TRP and/or the RS of the second TRP satisfies at least one of the following:
the signal strength of the RS of the first TRP is positively weighted;
the interference of the RS of the first TRP to the RS of the second TRP is negatively weighted;
the interference of the RS of the second TRP to the RS of the first TRP is positively weighted; and
the signal strength of the RS of the second TRP is negatively weighted.

18. The method according to claim 1 to 17, wherein the first TRP and/or the second TRP are/is determined by at least one of the following methods:
a control resource set pool index (CORESETPoolIndex) in the CORESET;
a TCI location in a code point of a transmission configuration indication (TCI);
a CORESET identifier;
indicated by high layer signaling;
reported by the terminal device; and
configured by special configuration signaling.

19. The method according to claim 18, wherein the first TRP is determined by at least one of the methods, wherein the second TRP is a TRP other than the first TRP.

20. The method according to claim 18, wherein the second TRP is configured through the special configuration signaling, wherein the special configuration signaling is used to configure at least one of the following:
an identifier of the first TRP;
an RS associated with the first TRP; and
a specially configured RS, wherein the specially configured RS belongs to the first TRP or the second TRP.

21. A beam report method, wherein the method is performed by a network device, and comprises:
receiving a beam report, wherein the beam report is obtained by performing measurement based on at least one of an RS of a first TRP and an RS of a second TRP, and for the beam report, referring to or prioritizing the first RS of the first TRP.

22. The method according to claim 21, wherein the method further comprises:
receiving an aperiodic beam report through the second TRP, wherein the aperiodic beam report is triggered in a case that the first RS changes; or
receiving a first message through the second TRP, wherein the first message is used to indicate that the first RS changes.

23. The method according to claim 21, wherein the number of the first RS is N, the beam report is obtained by performing measurement based on the RS of the second TRP, the beam report comprises M RSs of the second TRP, M and N are positive integers, and for the beam report, the referring to the first RS of the first TRP comprises:
for the M RSs of the second TRP, referring to M first RSs respectively; or
for each of the M RSs of the second TRP, referring to N first RSs.

24. The method according to claim 21, wherein the beam report is obtained by performing measurement based on the RS of the second TRP, and for the beam report, the referring to the first RS of the first TRP comprises:
the beam report comprises an RS with a smallest first interference value to the first RS.

25. The method according to claim 21, wherein the beam report is obtained by performing measurement based on the RS of the second TRP, and for the beam report, the referring to the first RS of the first TRP comprises:
the beam report comprises an RS with a smallest second interference value of the first RS.

26. The method according to claim 21, wherein the beam report is obtained by performing measurement based on the RS of the second TRP, and for the beam report, the referring to the first RS of the first TRP comprises:
for the RS comprised in the beam report, referring to a beam quality of the first RS and at least one of the following: a beam quality of the RS of the second TRP; a noise; a signal-to-interference-plus-noise ratio; and an interference value.

27. The method according to claim 26, wherein the beam report comprises the second RS of the second TRP, wherein
a signal-to-interference-plus-noise ratio of the second RS is the largest; or
the second RS satisfies: a value calculated based on a combination of parameters of the first RS and/or the second RS satisfies a preset condition, wherein the parameters comprise a noise, a signal-to-interference-plus-noise ratio, a reference signal received power, and an interference value.

28. The method according to claim 1, wherein the beam report is obtained by performing measurement based on the RS of the first TRP and the RS of the second TRP, and the first RS is at least one of RSs of the first TRP.

29. The method according to claim 28, wherein for the beam report, the prioritizing the first RS of the first TRP comprises:
the beam report comprises at least one RS of the first TRP.

30. The method according to claim 28, wherein for the beam report, the prioritizing the first RS of the first TRP comprises:
in a case that a beam quality of the RS of the second TRP is higher than a beam quality of the RS of the first TRP and reaches a preset threshold, the beam report comprises the RS of the second TRP.

31. The method according to claim 28, wherein the beam report is a group based beam report, and for the beam report, the prioritizing the first RS of the first TRP comprises:
at least one group of paired RSs in the beam report comprises at least one RS of the first TRP.

32. The method according to claim 28, wherein the beam report is a group based beam report, and for the beam report, the prioritizing the first RS of the first TRP comprises:
in the beam report, the RS of the first TRP and/or the RS of the second TRP satisfies at least one of the following:
a signal strength of the RS of the first TRP is weighted;
an interference of the RS of the first TRP to the RS of the second TRP is weighted;
an interference of the RS of the second TRP to the RS of the first TRP is weighted; and
a signal strength of the RS of the second TRP is weighted.

33. The method according to claim 21 to 32, wherein the first TRP and/or the second TRP are/is determined by at least one of the following methods:
a CORESETPoolIndex in the CORESET;
a TCI location in a code point of a TCI;
a CORESET identifier;
indicated by high layer signaling;
reported by the terminal device; and
configured by special configuration signaling.

34. A terminal device, comprising:
a sending module, configured to send a beam report, wherein the beam report is obtained by performing measurement based on at least one of an RS of a first TRP and an RS of a second TRP, and for the beam report, refer to or prioritize the first RS of the first TRP.

35. A network device, comprising:
a receiving module, configured to receive a beam report, wherein the beam report is obtained by performing measurement based on at least one of an RS of a first TRP and an RS of a second TRP, and for the beam report, refer to or prioritize the first RS of the first TRP.

36. A terminal device, comprising: a memory, a processor, and an instruction or a program stored in the memory and executable on the processor, wherein when the instruction or the program is executed by the processor, the beam report method according to any one of claims 1 to 20 is implemented.

37. A network device, comprising: a memory, a processor, and an instruction or a program stored in the memory and executable on the processor, wherein when the instruction or the program is executed by the processor, the beam report method according to any one of claims 21 to 33 is implemented.

38. A readable storage medium, wherein the readable storage medium stores an instruction or a program, and when the instruction or the program is executed by a processor, the beam report method according to any one of claims 1 to 33 is implemented.
